# FASCICULE DE BREVET EUROPEEN

(11) **EP 3 680 782 B1**
(45) Date de publication et mention de la délivrance du brevet: **15.03.2023**
(21) Numéro de dépôt: 20150308.3
(22) Date de dépôt: 06.01.2020
(51) Int. Cl.: G06F 12/14, G06F 21/57

(54) **ELÉMENT SÉCURISÉ À FONCTIONS PERSONNALISABLES, ET PROCÉDÉ CORRESPONDANT**
GESICHERTES ELEMENT MIT INDIVIDUELL ANPASSBAREN FUNKTIONEN, UND ENTSPRECHENDES VERFAHREN
SECURE ELEMENT WITH CUSTOMISABLE FUNCTIONS AND CORRESPONDING METHOD

(30) Priorité: 08.01.2019 FR 1900143
(43) Date de publication de la demande: 15.07.2020
(73) Titulaire: STMicroelectronics (Rousset) SAS, 13790 Rousset (FR)
(72) Inventeur: TABARIES, Laurent, 13400 AUBAGNE (FR); BLANC, Jean-Luc, 83910 POURRIERES (FR); GUILLOUX, Yveline, 13120 GARDANNE (FR)
(74) Mandataire: Casalonga

(56) Documents cités:
- EP-A1- 2 988 243
- US-A1- 2018 034 793
- Unknoown: "TCG TPM 2.0 Automotive Thin Profile", , 16 mars 2015 (2015-03-16), XP055321412, Extrait de l'Internet: URL:http://www.trustedcomputinggroup.org/w p-content/uploads/TCG-TPM-2.0-Automotive-T hin-Profile_v1.0.pdf [extrait le 2016-11-21]

## Description

Des modes de réalisation et de mise en oeuvre concernent les éléments sécurisés, en particulier ceux compatibles avec la norme « TCG-TPM 2.0 ». De tels éléments sécurisés conformes à la norme TCG-TPM 2.0 sont généralement désignés sous le vocable « TPM » (« Trusted Platform Module »). Un état de l'art antérieur est représenté par le document EP2988243 A1 qui divulgue un élément sécurisé de type TPM mettant en oeuvre un processus de vérification d'intégrité de plateforme de l'élément sécurisé comprenant une pile logicielle TPM dont les commandes TPM standards envoyées sont complétées de commandes TPM non standard. Un autre état de l'art antérieur est représenté par US2018/034793 A1 dui décrit un système muni d'un dispositif HACSP ("High Assurance Configuration Security Processor") ayant une fonctionnalité de démarrage et une fonctionnalité de gestion de mise à jour.

Les éléments sécurisés sont typiquement des circuits intégrés dont les fonctions sont d'assurer des tâches critiques dans les systèmes électroniques et informatiques, telles que des vérifications au démarrage, ou de certifier des requêtes critiques, par exemple par des moyens cryptographiques.

Les éléments sécurisés sont typiquement sécurisés sur le plan logiciel via des cryptages utilisant des clés propriétaires, et sur le plan matériel via des dispositifs anti-fraude.

La norme « TCG-TPM 2.0 » est établie par le consortium TCG pour « Trusted Computing Group » pour normaliser les techniques dédiées à la sécurisation d'un système, notamment par intégration de clés de chiffrement dans le matériel, désignées par l'acronyme TPM de « Trusted Platform Module ». La version 2.0 de cette norme a été publiée en mars 2014.

La norme TPM (TPM2.0) expose un ensemble fini de commandes et de fonctions prédéfinies permettant de réaliser de nombreuses fonctions de sécurité, en conformité avec des protocoles de communication tels que SPI (pour « Serial Peripheral Interface » en anglais).

Les éléments sécurisés du type TPM sont classiquement utilisés dans les ordinateurs et les serveurs comme source de confiance, par exemple pour vérifier l'intégrité de l'ordinateur pendant l'initialisation du système.

Aujourd'hui, les systèmes de téléphones mobiles et de tablettes tactiles, ainsi que les systèmes électroniques de l'industrie automobile, sont de plus en plus concernés par les besoins de sécurisation.

En effet, en particulier les systèmes électroniques de l'industrie automobile comportent de plus en plus d'unités de contrôle électronique, comportant chacune par exemple un microcontrôleur et une mémoire pour exécuter des applications, et forment un système complexe de réseaux séparés. En outre, les systèmes électroniques de l'industrie automobile sont presque tous connectés à l'Internet et à des réseaux personnels locaux.

Il est donc souhaitable dans ce contexte de bénéficier des dispositifs de protection fournis par les éléments sécurisés du type TPM.

Par ailleurs, les systèmes électroniques de l'industrie automobile en particulier présentent des contraintes spécifiques typiquement beaucoup plus exigeantes que dans d'autres domaines.

Or, même si la liste des commandes et fonctions de la norme TPM est importante, il serait souhaitable d'avoir accès à des fonctions spécifiques non-définies, ou de permettre d'ajouter des instructions personnalisées.

Des modes de réalisation et de mise en oeuvre de l'invention visent un élément sécurisé proposant des instructions et des fonctions personnalisées en plus de celles prévues par la norme TCG-TPM 2.0, pour étendre le potentiel d'action de l'élément sécurisé et donner une solution flexible respectant pleinement les exigences de la norme TPM par exemple.

Selon un premier aspect, il est proposé un procédé de gestion du fonctionnement d'un élément sécurisé comprenant un chargement dans une mémoire non-volatile de cet élément sécurisé de premières instructions relatives à des fonctions de sécurité préétablies et d'au moins une deuxième instruction relative à au moins une autre fonction personnalisée, et au moins une exécution d'une instruction parmi les premières instructions et ladite au moins une deuxième instruction.

Ainsi, contrairement à par exemple une exécution codée en dur d'un élément sécurisé, le procédé selon cet aspect bénéficie notamment par l'utilisation d'un chargement dans une mémoire non-volatile, par exemple une mémoire Flash, d'une flexibilité tout en proposant un jeu de fonctions de sécurité préétablies.

Une fonction personnalisée est par exemple une fonction établie par un utilisateur de l'élément sécurisé, par exemple un constructeur automobile qui prévoit d'équiper certains véhicules de sa marque de tels éléments sécurisés avec la possibilité de personnaliser ces éléments sécurisés avec une ou plusieurs fonctions personnalisées dédiées par exemple à certains besoins de ce constructeur.

Selon un mode de mise en oeuvre, le procédé comprend une réception d'un code opération, une conversion à la volée du code opération reçu en une instruction correspondante appartenant auxdites premières instructions ou à ladite au moins une deuxième instruction, et l'exécution de l'instruction correspondante.

Ce mode de mise en oeuvre permet notamment de respecter des contraintes très exigeantes en matière de rapidité.

Avantageusement, le procédé comprend lors de chaque démarrage de l'élément sécurisé un chargement desdites premières instructions et de ladite au moins une deuxième instruction depuis la mémoire non-volatile vers une table de conversion, et une assignation auxdites premières instructions et à ladite au moins une deuxième instruction d'un code opération de référence respectif. Aussi, ladite conversion comporte une comparaison du code opération reçu avec les codes opérations de référence de façon à identifier ladite instruction correspondante à exécuter.

Ainsi, tout type de fonction personnalisée peut être adapté à l'élément sécurisé, via le chargement depuis la mémoire non volatile vers la table de conversion, sans pour autant adapter le mécanisme de l'élément sécurisé ni modifier sa conception.

Par exemple, le code opération reçu comprend des données binaires, et ladite comparaison comprend des opérations logiques non-ou exclusif, pour identifier à la volée le code opération de référence correspondant au code opération reçu. Bien entendu, les opérations logiques non-ou exclusif sont effectuées entre les données binaires du code opération reçu et des données binaires desdits codes opération assignés aux instructions.

Ce mode de mise en oeuvre permet notamment de respecter des contraintes très exigeantes en matière de rapidité, l'identification prenant le temps d'une opération logique, qui est minimal.

Le procédé peut comprendre une réception d'un signal de commande entrant sur une interface d'entrée/sortie de l'élément sécurisé, comportant ledit code opération reçu.

Selon un mode de mise en oeuvre, le chargement dans la mémoire non-volatile n'est fait qu'une seule fois lors d'une phase de production de l'élément sécurisé. A cet égard, on pourra prévoir une zone mémoire réservée au fabriquant, matériellement inaccessible en dehors de la phase de production.

Selon l'invention lesdites fonctions de sécurité préétablies font partie d'une bibliothèque de commandes et de fonctionnalités de la norme « TCG-TPM 2.0 ».

Selon l'invention, ladite au moins une autre fonction personnalisée comprend une fonction qui n'est pas prévue par lesdites fonctions de sécurité préétablies. Selon un mode de mise en oeuvre, ladite au moins une autre fonction personnalisée comprend en outre une fonction de complément améliorant ou personnalisant l'exécution de l'une desdites fonctions de sécurité préétablies.

Selon un mode de mise en oeuvre, le procédé comprend en outre une génération d'au moins un signal de commande destiné à commander ladite au moins une exécution.

Le procédé est avantageusement destiné à être appliqué à un véhicule du type automobile, et ladite génération d'au moins un signal de commande provient d'au moins l'une des unités de contrôle électroniques, incorporées au véhicule, suivantes : une unité de contrôle télématique, une unité de passerelle inter-réseaux, une unité d'aide à la conduite.

Selon un autre aspect, il est proposé un élément sécurisé, comprenant une mémoire non-volatile configurée pour stocker des premières instructions relatives à des fonctions de sécurité préétablies et pour stocker au moins une deuxième instruction relative à au moins une autre fonction personnalisée, et une unité de calcul configurée pour exécuter au moins une instruction parmi les premières instructions et ladite au moins une deuxième instruction.

Selon un mode de réalisation, l'élément sécurisé est capable de recevoir un code opération, et comporte une table de conversion configurée pour convertir à la volée un code opération reçu en une instruction correspondante appartenant auxdites premières instructions ou à ladite au moins une deuxième instruction, l'unité de calcul étant configurée pour exécuter l'instruction correspondante.

Avantageusement, l'élément sécurisé est configuré pour, lors de chaque démarrage de l'élément sécurisé, charger lesdites premières instructions et ladite au moins une deuxième instruction depuis la mémoire non-volatile, et assigner auxdites premières instructions et à ladite au moins une deuxième instruction un code opération de référence respectif. Aussi, la table de conversion est configurée pour comparer le code opération reçu avec les codes opérations de référence de façon à identifier ladite instruction correspondante à exécuter.

Par exemple, le code opération reçu comprend des données binaires, et la table de conversion comprend des portes logiques non-ou exclusif, pour identifier à la volée le code opération de référence correspondant au code opération reçu.

Par exemple, l'élément sécurisé comporte une interface d'entrée/sortie adaptée pour être connectée avec une unité de contrôle électronique, et pour recevoir un signal de commande entrant sur l'interface d'entrée/sortie comportant ledit code opération reçu.

Selon un mode de réalisation, la mémoire non-volatile est configurée pour n'être écrite qu'une seule fois lors d'une phase de production de l'élément sécurisé.

Selon l'invention, lesdites fonctions de sécurité préétablies font partie d'une bibliothèque de commandes et de fonctionnalités de la norme « TCG-TPM 2.0 ».

Selon l'invention, ladite au moins une autre fonction personnalisée comprend une fonction qui n'est pas prévue par lesdites fonctions de sécurité préétablies. Selon un mode de réalisation, ladite au moins une autre fonction personnalisée comprend en outre une fonction de complément améliorant ou personnalisant l'exécution de l'une desdites fonctions de sécurité préétablies.

Il est également proposé un système comportant au moins un élément sécurisé tel que défini ci-avant, ainsi qu'au moins une unité de contrôle électronique configurée pour générer des signaux de commande destinés à commander l'exécution de ladite au moins une instruction.

Un véhicule du type automobile, peut comporter avantageusement un tel système, et ladite au moins une unité de contrôle électronique comprend au moins l'une des unités suivantes : une unité de contrôle télématique, une unité de passerelle inter-réseaux, une unité d'aide à la conduite.

La présente invention est définie par les revendications indépendantes jointes auxquelles il convient de se référer. Des caractéristiques avantageuses sont exposées dans les revendications dépendantes.

D'autres avantages et caractéristiques de l'invention apparaîtront à l'examen de la description détaillée de modes de réalisation et de mise en oeuvre, nullement limitatifs, et des dessins annexés sur lesquels :
[Fig.1] illustre un exemple de réalisation de l'invention ;
[Fig.2] illustre un exemple de réalisation de l'invention ;
[Fig.3] illustre un exemple de réalisation de l'invention ;
[Fig.4] illustre un exemple de réalisation de l'invention ;
[Fig.5] illustre un exemple de réalisation de l'invention ;
[Fig.6] illustre un exemple de mise en oeuvre de l'invention.

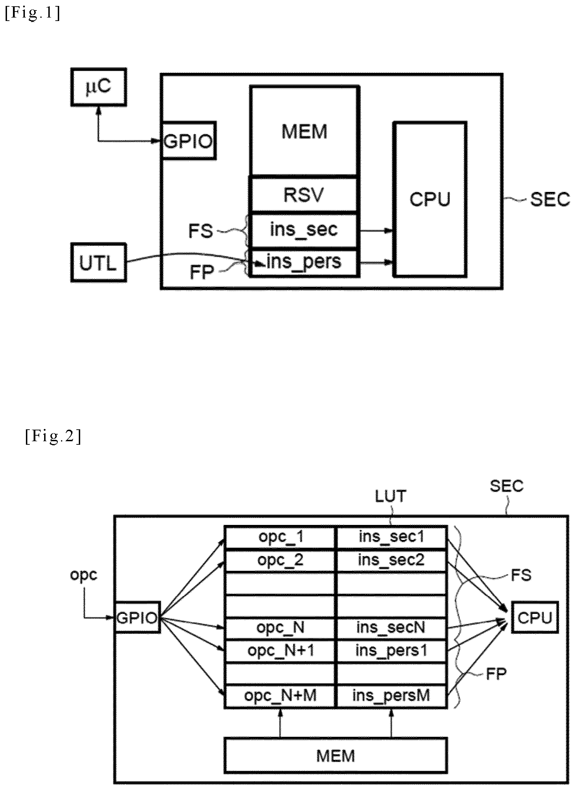

La figure 1 représente un exemple de réalisation d'un élément sécurisé SEC bénéficiant d'une flexibilité dans l'exploitation de ses fonctions, tout en respectant des critères normalisés de sécurité.

Contrairement à des éléments sécurisés classiques, généralement codés en dur et donc impossible à personnaliser, l'élément sécurisé SEC comprend une mémoire non-volatile MEM contenant des instructions relatives aux fonctionnalités de l'élément sécurisé SEC.

La mémoire non-volatile MEM est ainsi configurée pour stocker des premières instructions ins_sec, et des deuxièmes instructions ins_pers, ou au moins une deuxième instruction ins_pers.

Les premières instructions ins_sec permettent d'exécuter des fonctions de sécurité préétablies FS, et les deuxièmes instructions ins_pers permettent d'exécuter des autres fonctions personnalisées FP.

Lesdites autres fonctions personnalisées FP sont établies par un utilisateur UTL, c'est-à-dire par exemple un client visant à utiliser l'élément sécurisé SEC.

Pour des raisons de sécurité, les premières instructions et les deuxièmes instructions sont écrites dans une zone réservée RSV de la mémoire MEM, par exemple dont l'accès en écriture n'est pas permis en dehors d'une phase de production (EWS) de l'élément sécurité SEC.

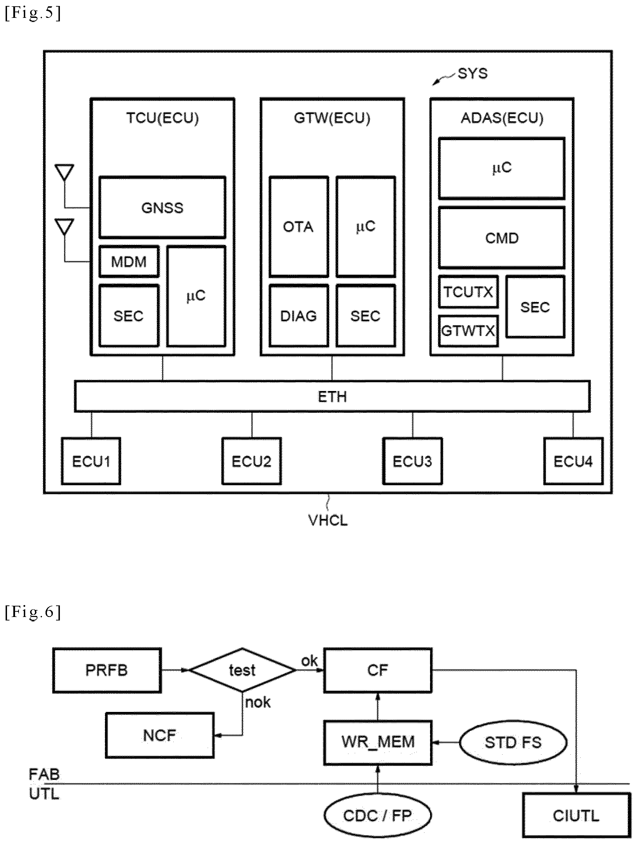

A cet égard on se réfère à la figure 6.

La figure 6 illustre un exemple de mise en oeuvre d'un procédé, en particulier une étape de chargement des instructions dans la mémoire MEM.

A la fin d'une phase de fabrication PRFB de l'élément sécurisé, sous la forme d'un circuit intégré réalisé dans une plaquette de silicium, une phase de tri des plaquettes sous caractérisation électrique EWS est typiquement mise en oeuvre. Lors de cette phase EWS de la production, un test électrique est réalisé et les plaquettes conformes CF sont séparées des plaquettes non-conformes NCF. A ce moment, une écriture unique WR_MEM est réalisée notamment dans la partie réservée RSV de la mémoire MEM, et éventuellement dans des mémoires non volatile en lecture seule. Cette écriture unique permet de charger lesdites premières instructions de fonctions de sécurité préétablies STDFS par exemple suivant une norme, et de charger lesdites deuxièmes instructions des fonctions personnalisés CDC/FP.

L'utilisateur destinataire UTL peut par exemple fournir le code source desdites deuxièmes instructions FP au fabricant FAB de l'élément sécurisé. L'utilisateur destinataire UTL peut également fournir un cahier des charges CDC comprenant des critères définissant ladite au moins une fonction personnalisé FP, le fabricant FAB se chargeant alors de concevoir le code source des deuxièmes instructions FB selon le cahier des charges CDC.

La mémoire non-volatile MEM est ainsi avantageusement configurée pour n'être écrite WR_MEM qu'une seule fois lors de la fabrication EWS de l'élément sécurisé SEC.

Le client destinataires UTL bénéficie ensuite d'un élément sécurisé CIUTL suivant sa propre personnalisation CDC/FP et en conformité avec une éventuelle norme STDFS.

On se réfère à nouveau à la figure 1.

L'élément sécurisé SEC comporte enfin une unité de calcul CPU configurée pour exécuter les premières instructions ins_sec et les deuxièmes instructions ins_pers.

En particulier, l'élément sécurisé SEC peut être du type périphérique esclave, pour lequel les exécutions des premières instructions ins_sec et des deuxièmes instructions ins_pers sont commandées par un périphérique maître µC, comportant typiquement un microcontrôleur maître.

A cet égard, l'élément sécurisé SEC peut comporter une interface d'entrée/sortie GPIO adaptée pour être connectée avec un périphérique maître µC.

Par exemple le périphérique maître µC est une unité de contrôle électronique d'un système électronique de l'industrie automobile.

Le périphérique maître µC est configuré pour générer des signaux de commande commandant des dispositifs esclaves, qui sont ainsi reçus sur l'interface d'entrée/sortie GPIO. Un signal de commande peut comporter des codes opérations ope, typiquement une suite de données binaires désignant une fonction donnée, de façon préétablie.

Par exemple, l'interface d'entrée/sortie GPIO, et les signaux de commande des périphériques maître-esclave peuvent correspondre à une application du protocole SPI (pour « Serial Peripheral Interface » en anglais, classique et connu en soi).

En outre, l'élément sécurisé SEC remplit des critères normalisés de sécurité, tels que par exemple des certifications EAL4+, EAL5+ au niveau matériel, ou des normes du type TCG-TPM au niveau logiciel.

Ainsi, les fonctions de sécurité préétablies FS sont inclues à une bibliothèque de commandes et de fonctionnalités de la norme « TCG-TPM 2.0 », et remplissent les critères de cette norme.

Par ailleurs, ladite au moins une autre fonction personnalisé FP par l'utilisateur UTL comprend une fonction qui n'est pas prévue dans une bibliothèque de fonctions appartenant à une norme donnée, ou du moins qui n'est pas prévue par lesdites fonctions de sécurité préétablies FS chargées dans la mémoire MEM.

Ladite au moins une autre fonction personnalisée FP par l'utilisateur UTL peut également comprendre une fonction de complément améliorant ou personnalisant l'exécution de l'une desdites fonction de sécurité préétablie FS.

Bien entendu, on veillera à ce que les fonctions personnalisées FP restent en conformité avec les exigences desdites normes. A cet égard, l'invention prévoit des fonctions personnalisées FP qui utilisent les mécanismes sécurisés respectant des critères normés, mais d'une façon qui n'est pas prévue dans une bibliothèque de commandes et de fonctionnalités d'une norme donnée.

En outre, comme mentionné ci-avant, l'élément sécurisé SEC peut être appliqué à des systèmes électroniques de l'industrie automobile. Dans ce cas, lesdites autres fonctions personnalisées FP sont élaborées par un utilisateur issu de l'industrie automobile, par exemple pour introduire un système de certification de données de son choix, ou mettre en oeuvre une fonction de sécurité préétablie FS mais adaptée de façon optimale à son système électronique, ou encore permettre des mises-à-jour sécurisées d'une façon différente de ce que propose une norme donnée.

La figure 2 illustre un exemple de réalisation de l'élément sécurisé SEC permettant une exécution rapide avec des ressources limitées. Cela peut correspondre à des contraintes relatives aux systèmes électroniques de l'industrie automobile.

L'élément sécurisé SEC selon cet exemple comporte une table de conversion LUT (usuellement désignée par le terme anglais « look-up table »).

La table de conversion LUT est configurée pour convertir à la volée un code opération opc reçu en une instruction correspondante parmi les premières instructions ins_sec1, ins_sec2, ..., ins_secN, et parmi les deuxièmes instructions ins_pers1, ..., ins_persM.

Le code opération est par exemple reçu sur l'interface d'entrée/sortie GPIO.

Juste après la conversion, l'unité de calcul CPU exécute alors l'instruction correspondant au code opération reçu.

Par le terme « convertir à la volée », on entend une traduction dynamique du code opération opc reçu, en langage machine exécutable (ici, les premières et deuxièmes instructions). C'est-à-dire que la traduction n'est pas faite lors d'une compilation en amont de la réception du code opération opc, mais au moment de sa réception, et avantageusement sans délai.

La table de conversion LUT est initialisée à chaque démarrage, ou mise sous tension et réinitialisation (d'après terme usuel anglais « power on reset »), de l'élément sécurisé SEC.

L'initialisation de la table de conversion LUT comprend d'une part un chargement depuis la mémoire non-volatile MEM desdites premières instructions ins_sec1-ins_sec_N et deuxièmes instructions ins_pers1-ins_persM. Et d'autre part, mais simultanément, une assignation auxdites premières et deuxièmes instructions ins_sec1-ins_sec_N, ins_pers1-ins_persM, d'un code opération de référence respectif opc_1-opc_N et opc_N+1-opc_M.

On référera dans la suite une première instruction par ins_sec, une deuxième instruction par ins_pers, et un code opération de référence par opc_j.

Ainsi, ladite conversion à la volée peut comporter une comparaison du code opération reçu opc avec les codes opérations de référence opc_j de façon à identifier l'instruction correspondante à exécuter.

Les codes opérations opc_j respectivement assignés aux premières et deuxièmes instructions ins_sec, ins_pers, sont initialement contenus dans la mémoire non-volatile MEM.

Par exemple, le code opération opc_j est écrit comme une donnée dans la mémoire MEM lors du chargement des premières et deuxièmes instructions ins_sec, ins_pers.

Selon une alternative avantageuse, des emplacements mémoires dans la mémoire MEM sont préalablement associés à des codes opérations opc_j respectifs, et l'adresse de l'emplacement mémoire d'une instruction ins_sec, ins_pers permet de retranscrire le code opération opc_j respectif.

Cette alternative permet également d'optimiser ledit chargement depuis la mémoire non-volatile MEM desdites premières et deuxièmes instructions. En effet, les codes opérations opc_j étant associées à des emplacements mémoire de la mémoire MEM, la table de conversion LUT peut comporter, éventuellement de façon codée en dur, des pointeurs pointant vers ces emplacements mémoire, permettant de charger immédiatement la table de conversion LUT avec les instructions ainsi automatiquement assignées du code opération opc_j correspondant.

La table de conversion LUT peut comporter en outre des emplacements laissés vides, par exemple pour permettre des introductions de nouvelles fonctions préétablies en cas d'évolution future d'une norme, sans avoir à modifier nécessairement la technologie qui la met en oeuvre.

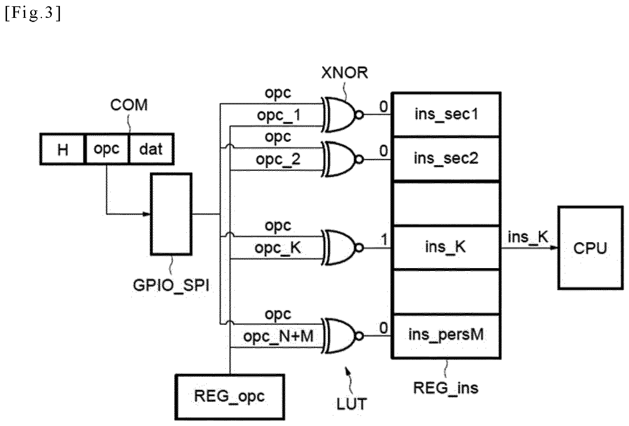

La figure 3 représente un exemple de réalisation d'une table de conversion LUT d'un élément sécurisé SEC du type de celui décrit en relation avec la figure 2.

Dans cet exemple, la table de conversion LUT comprend des portes logiques non-ou exclusif XNOR, pour identifier à la volée le code opération reçu opc avec les codes opérations opcj_i respectivement assignées auxdites premières et deuxièmes instructions ins_sec, ins_pers.

Le code opération reçu opc comprend des données binaires (i.e. des « bits »), et provient par exemple d'une commande COM transmise selon une communication du type SPI, reçue par l'interface d'entrée/sortie GPIO_SPI. La commande COM selon le protocole SPI contient un en-tête H, un code opération opc, et des données dat.

Une porte logique non-ou exclusif « XNOR » permet d'effectuer une comparaison entre deux bits d'entrée, sortant une donnée logique « vrai » (i.e. bit « 1 ») si les bits d'entrée sont égaux, et une valeur logique « faux » (i.e. bit « 0 ») si les données d'entrée sont différentes. Une porte ou exclusif « XOR » produit le même effet avec les valeurs inverses en sortie.

Les bits du code opération reçu opc sont comparés un-à-un avec les bits de tous les codes opérations opc_1, opc_2, ..., opc_k, ..., opc_N+M de la table de conversion LUT, en parallèle.

Cela permet avantageusement d'identifier le code opération de référence opc_k qui correspond au code opération reçu opc, instantanément (c'est-à-dire le temps d'un déclenchement d'une porte XNOR).

La valeur logique « vrai » en sortie de la porte non-ou exclusif XNOR permet alors de commander une exécution de l'instruction ins_k assignée du code opération opc_k identifié, par l'unité de calcul CPU.

Par exemple, un registre dédié REG_opc peut contenir et fournir les bits des codes opération opc_1-opc_N+M de la table de conversion LUT, et un autre registre dédié REG_ins peut contenir et fournir les instructions ins_sec1-ins_persM de la table de conversion LUT.

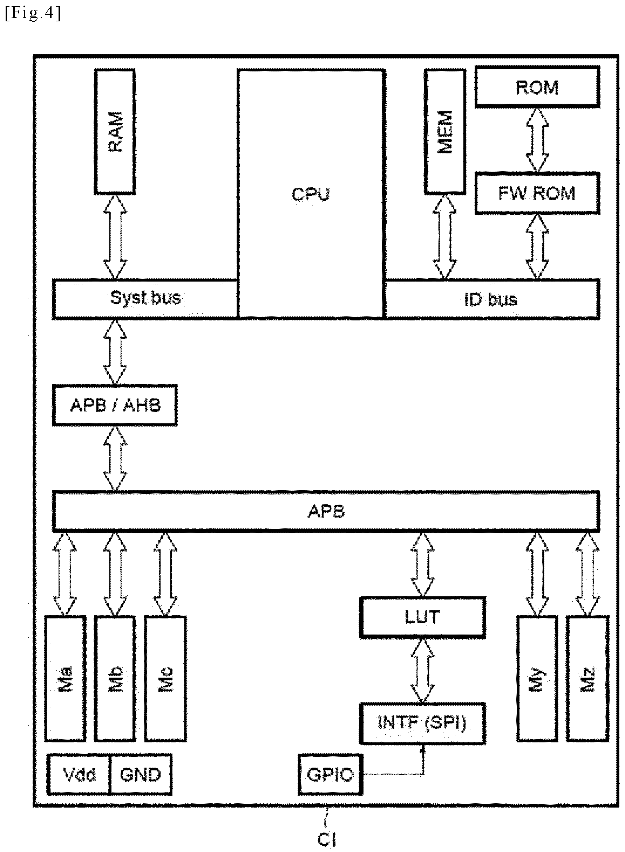

La figure 4 illustre un exemple de circuit intégré CI incorporant un élément sécurisé SEC du type d'un exemple décrit précédemment en relation avec les figures 1 à 3. Usuellement, ce type de circuit intégré CI est également désigné par « élément sécurisé », et comporte des fonctionnalités additionnelles à celles décrites précédemment.

Le circuit intégré CI comporte une interface d'entrée/sortie GPIO de but général, c'est-à-dire des éléments de connexion destinés à communiquer avec des périphériques extérieurs au circuit intégré CI, ainsi que classiquement des bornes d'application de tension d'alimentation Vdd et de tension de référence GND.

Le circuit intégré CI comporte une interface de périphérique série INTF capable de décoder des informations transmises selon le protocole SPI. Une entrée de l'interface INTF est connectée à l'entrée/sortie GPIO, et une sortie de l'interface INTF est connectée à la table de conversion LUT de l'élément sécurisé SEC, pour convertir à la volée un code opération reçu en une instruction correspondante.

Des modules Ma, Mb, Mc, ..., My, Mz de fonctions diverses communiquent dans le circuit intégré CI via un bus APB, c'est-à-dire du type « Advanced Peripheral Bus ».

Les modules Ma-Mz peuvent être du type générateur de signal d'horloge, minuteur (« timer »), interface de divers protocoles, générateur de nombre aléatoire, accélérateur matériel de calculs cryptographiques, et autres.

Un pont de bus APB/AHB permet de communiquer entre le bus APB et un premier bus système Systbus, par exemple du type « Advanced High-performance Bus ».

Une mémoire volatile RAM peut communiquer sur le premeir bus système Systbus.

Une unité de calcul sécurisée CPU du circuit intégré CI commande de façon sécurisée le premier bus système Systbus et un second bus système IDbus. L'unité de calcul CPU précédemment décrite en relation avec les figures 1 à 3 est réalisée par cette unité de calcul sécurisée CPU du circuit intégré CI.

La mémoire non-volatile MEM de l'élément sécurisé communique via le second bus système IDbus. Par exemple la mémoire non-volatile MEM est du type mémoire « Flash ».

Une mémoire non-volatile en lecture seule ROM communique également sur le second bus système IDbus, via un pare-feu dédié FWROM.

Ainsi, dans l'initialisation de la table de conversion LUT, lors de chaque démarrage et réinitialisation du circuit intégré, le chargement des premières et deuxièmes instructions depuis la mémoire non-volatile MEM est commandé par l'unité de calcul sécurisée CPU, pour emprunter le chemin suivant : second bus système IDbus, l'unité de calcul sécurisée CPU, le premier bus système Systbus, le pont de bus AHB/APB, et enfin la table de conversion LUT via le bus APB.

Une fois les instructions chargées dans la table de conversion LUT, les codes opérations correspondant seront comparés à la volée au flux SPI entrant.

La figure 5 représente un exemple de système électronique de l'industrie automobile SYS incorporé à un véhicule VHCL du type automobile.

Le système comporte plusieurs unités de contrôle électronique ECU, en particulier une unité de contrôle télématique TCU, une unité de passerelle inter-réseaux GTW, une unité d'aide à la conduite ADAS.

L'unité de contrôle télématique TCU comporte système détection et de capteurs de positionnement par satellite GNSS, un modem MDM configuré pour communiquer avec un réseau de télécommunication téléphonique, et une unité de contrôle µC du type microcontrôleur. L'unité de contrôle télématique TCU peut aussi comporter un élément de mise à jour à distance (non-représenté) capable par exemple de télécharger une mise à jour de micro-logiciel (« Firmware » en anglais) depuis un serveur distant.

D'autre part, l'unité de contrôle télématique TCU peut aussi être utilisée pour centraliser des fonctions de tableau de bord et des fonctions multimédia (notamment audio et vidéo) du véhicule.

L'unité de passerelle inter-réseaux GTW est dédiée à l'intercommunication entre des sous-réseaux du système électronique automobile SYS, et comporte un élément de mise à jour à distance OTA ainsi qu'un élément de diagnostic DIAG destiné à contrôler un état fonctionnel des éléments du système, et un microcontrôleur µC.

L'unité d'aide à la conduite ADAS comporte un microcontrôleur µC, un élément de commande CMD configuré pour piloter des commandes relatives à l'aide à la conduite, telles que les freins ou la direction. L'unité d'aide à la conduite ADAS comporte en outre un élément de communication TCUTX avec l'unité de contrôle télématique TCU, et un élément de communication GTWTX avec l'unité de passerelle inter-réseaux GTW.

L'unité de contrôle télématique TCU, l'unité de passerelle inter-réseaux GTW, l'unité d'aide à la conduite ADAS ainsi que des unités de contrôle électronique secondaires ECU1-ECU4 communiquent via un routeur ethernet ETH.

L'unité de contrôle télématique TCU, l'unité de passerelle inter-réseaux GTW, l'unité d'aide à la conduite ADAS forment des unités dites principales du système SYS, et ont toutes une position critique en matière de sécurité.

Ainsi, des éléments sécurisés SEC tels que décrits précédemment en relation avec les figures 1 à 4 sont avantageusement incorporés au système SYS. En particulier, chaque unité principale TCU, GTW, ADAS comporte un élément sécurisé SEC assurant l'authenticité des actions des unités principales.

Les unités secondaires ECU1-ECU4 peuvent également incorporer de tels éléments sécurisés SEC.

Les unités principales de contrôle électronique TCU, GTW, ADAS sont configurées pour générer des signaux de commande destinés à commander les exécutions des instructions des éléments sécurisés SEC correspondants selon un exemple à des interactions maître-esclave.

Par exemple, une authentification personnalisée entre un serveur externe et le système peut être possible via l'unité de contrôle télématique TCU, au moyen de fonctions personnalisées à cet égard, chargée dans l'élément sécurisé SEC. Ce type d'authentification peut permettre un téléchargement de mise-à-jour des unités principales, pouvant elles-mêmes certifier de la provenance du programme téléchargé. En outre, tout type d'action sécurisée peut être prévu dans chaque élément sécurisé SEC et personnalisé de façon dédiée à un système SYS de ce type.

Par ailleurs l'invention n'est pas limitée à ces modes de réalisation et de mise en oeuvre mais en embrasse toutes les variantes. Par exemple, bien que décrits selon une application à un système électronique de véhicule, les éléments sécurisés SEC tels que décrits en relation avec les figures 1 à 4 peuvent s'appliquer à d'autres systèmes électroniques, par exemple des systèmes « grand-public » (« consumer » en langue anglaise) tels que des ordinateurs, téléphones, tablettes tactiles, ou divers objets connectés.

## Revendications

1. Procédé de gestion du fonctionnement d'un élément sécurisé (SEC) comprenant un chargement dans une mémoire non-volatile (MEM) de cet élément sécurisé (SEC) de premières instructions (ins_sec) relatives à des fonctions de sécurité préétablies (FS) et d'au moins une deuxième instruction (ins_pers) relative à au moins une autre fonction personnalisée (FP), et au moins une exécution d'une instruction parmi les premières instructions (ins_sec) et ladite au moins une deuxième instruction (ins_pers) ;
dans lequel lesdites fonctions de sécurité préétablies (FS) font partie d'une bibliothèque de commandes et de fonctionnalités de la norme « TCG-TPM 2.0 », et
ladite au moins une autre fonction personnalisée (FP) comprend une fonction qui n'est pas prévue par lesdites fonctions de sécurité préétablies (FS), et qui est configurée pour respecter des critères de la norme « TCG-TPM 2.0 ».

2. Procédé selon la revendication 1, comprenant une réception d'un code opération (opc), une conversion (LUT) à la volée du code opération (opc) reçu en une instruction correspondante (ins_k) appartenant auxdites premières instructions (ins_sec) ou à ladite au moins une deuxième instruction (ins_pers), et l'exécution de l'instruction correspondante (ins_k).

3. Procédé selon la revendication 2, comprenant lors de chaque démarrage de l'élément sécurisé (SEC), un chargement desdites premières instructions (ins_sec) et de ladite au moins une deuxième instruction (ins_pers) depuis la mémoire non-volatile (MEM) vers une table de conversion (LUT), et une assignation auxdites premières instructions (ins_sec) et à ladite au moins une deuxième instruction (ins_pers) d'un code opération de référence respectif (opc_j), ladite conversion comportant une comparaison du code opération reçu (opc) avec les codes opérations de référence (opc_j) de façon à identifier ladite instruction correspondantes (ins_k) à exécuter.

4. Procédé selon la revendication 3, dans lequel le code opération reçu (opc) comprend des données binaires, et ladite comparaison comprend des opérations logiques non-ou exclusif (XNOR), pour identifier à la volée le code opération de référence (opc_k) correspondant au code opération reçu (ope).

5. Procédé selon l'une des revendications 2 à 4, comprenant une réception d'un signal de commande entrant sur une interface d'entrée/sortie (GPIO) de l'élément sécurisé (SEC), comportant ledit code opération reçu (ope).

6. Procédé selon l'une des revendications 1 à 5, dans lequel le chargement dans la mémoire non-volatile (MEM) n'est fait (WR_MEM) qu'une seule fois lors d'une phase de production (EWS) de l'élément sécurisé (SEC).

7. Procédé selon l'une des revendications 1 à 6, dans lequel ladite au moins une autre fonction personnalisée (FP) comprend en outre une fonction de complément améliorant ou personnalisant l'exécution de l'une desdites fonctions de sécurité préétablies (FS).

8. Procédé selon l'une des revendications 1 à 7, comprenant en outre une génération d'au moins un signal de commande (COM) destiné à commander ladite au moins une exécution.

9. Procédé selon la revendication 8 destiné à être appliqué à un véhicule (VHCL) du type automobile, dans lequel ladite génération d'au moins un signal de commande provient d'au moins l'une des unités de contrôle électroniques (ECU), incorporées au véhicule, suivantes : une unité de contrôle télématique (TCU), une unité de passerelle inter-réseaux (GTW), une unité d'aide à la conduite (ADAS).

10. Elément sécurisé (SEC), comprenant une mémoire non-volatile (MEM) configurée pour stocker des premières instructions (ins_sec) relatives à des fonctions de sécurité préétablies (FS) et pour stocker au moins une deuxième instruction (ins_pers) relative à au moins une autre fonction personnalisée (FP), et une unité de calcul (CPU) configurée pour exécuter au moins une instruction (ins_k) parmi les premières instructions (ins_sec) et ladite au moins une deuxième instruction (ins_pers),
dans lequel lesdites fonctions de sécurité préétablies (FS) font partie d'une bibliothèque de commandes et de fonctionnalités de la norme « TCG-TPM 2.0 », et
ladite au moins une autre fonction personnalisée (FP) comprend une fonction qui n'est pas prévue par lesdites fonctions de sécurité préétablies (FS) et qui est configurée pour respecter des critères de la norme « TCG-TPM 2.0 ».

11. Elément sécurisé selon la revendication 10, capable de recevoir un code opération reçu (opc), comportant une table de conversion (LUT) configurée pour convertir à la volée un code opération (opc) reçu en une instruction correspondante (ins_k) appartenant auxdites premières instructions (ins_sec) ou à ladite au moins une deuxième instruction (ins_pers), l'unité de calcul (CPU) étant configurée pour exécuter l'instruction correspondante (ins_k).

12. Elément sécurisé selon la revendication 11, configuré pour, lors de chaque démarrage de l'élément sécurisé (SEC), charger lesdites premières instructions (ins_sec) et ladite au moins une deuxième instruction (ins_pers) depuis la mémoire non-volatile (MEM), et assigner auxdites premières instructions (ins_sec) et à ladite au moins une deuxième instruction (ins_pers) un code opération de référence respectif (opc_j), et dans lequel la table de conversion (LUT) est configurée pour comparer le code opération reçu (opc) avec les codes opérations de référence (opc_j) de façon à identifier ladite instruction correspondantes (ins_k) à exécuter.

13. Elément sécurisé selon la revendication 12, dans lequel le code opération reçu (opc) comprend des données binaires, et la table de conversion (LUT) comprend des portes logiques non-ou exclusif (XNOR), pour identifier à la volée le code opération de référence (opc_k) correspondant au code opération reçu (ope).

14. Elément sécurisé selon l'une des revendications 11 à 13, comportant une interface d'entrée/sortie (GPIO) adaptée pour être connectée avec une unité de contrôle électronique (ECU), et pour recevoir un signal de commande entrant sur l'interface d'entrée/sortie (GPIO) comportant ledit code opération reçu (ope).

15. Elément sécurisé selon l'une des revendications 10 à 14, dans lequel la mémoire non-volatile (MEM) est configurée pour n'être écrite (WR_MEM) qu'une seule fois lors d'une phase de production de l'élément sécurisé (SEC).

16. Elément sécurisé selon l'une des revendications 10 à 15, dans lequel ladite au moins une autre fonction personnalisée (FP) comprend en outre une fonction de complément améliorant ou personnalisant l'exécution de l'une desdites fonctions de sécurité préétablies (FS).

17. Système comportant au moins un élément sécurisé (SEC) selon l'une des revendications 10 à 16, ainsi qu'au moins une unité de contrôle électronique (ECU) configurée pour générer des signaux de commande (COM) destinés à commander l'exécution de ladite au moins une instruction (ins_k).

18. Véhicule (VHCL) du type automobile, comportant un système selon la revendication 17, ladite au moins une unité de contrôle électronique (ECU) comprenant au moins l'une des unités suivantes : une unité de contrôle télématique (TCU), une unité de passerelle inter-réseaux (GTW), une unité d'aide à la conduite (ADAS).

## Patentansprüche

1. Verfahren zum Verwalten des Betriebs eines gesicherten Elements (SEC), umfassend das Laden in einen nicht flüchtigen Speicher (MEM) dieses gesicherten Elements (SEC) von ersten Anweisungen (ins_sec) in Bezug auf zuvor festgelegte Sicherheitsfunktionen (FS) und von mindestens einer zweiten Anweisung (ins_pers) in Bezug auf mindestens eine weitere personalisierte Funktion (FP), und mindestens eine Ausführung einer Anweisung aus den ersten Anweisungen (ins_sec) und der mindestens zweiten Anweisung (ins_pers); wobei die zuvor festgelegten Sicherheitsfunktionen (FS) Teil einer Bibliothek von Steuerungen und von Funktionalitäten der Norm "TCG-TPM 2.0" sind, und
die mindestens eine weitere personalisierte Funktion (FP) eine Funktion umfasst, die von den zuvor festgelegten Sicherheitsfunktionen (FS) nicht vorgesehen ist, und die konfiguriert ist, um die Kriterien der Norm "TCG-TPM 2.0" einzuhalten.

2. Verfahren nach Anspruch 1, umfassend einen Empfang eines Operationscodes (opc), eine Umwandlung (LUT) ohne Verzögerung des empfangenen Operationscodes (opc) in eine entsprechende Anweisung (ins_k), die den ersten Anweisungen (ins_sec) oder der mindestens einen zweiten Anweisung (ins_pers) angehört, und die Ausführung der entsprechenden Anweisung (ins_k).

3. Verfahren nach Anspruch 2, bei jedem Start des gesicherten Elements (SEC) ein Laden der ersten Anweisungen (ins_sec) und der mindestens einen zweiten Anweisung (ins_pers) aus dem nicht flüchtigen Speicher (MEM) in eine Umwandlungstabelle (LUT), und eine Zuweisung zu den ersten Anweisungen (ins_sec) und zu der mindestens einen zweiten Anweisung (ins_pers) eines jeweiligen Referenz-Operationscodes (opc_j) umfassend, wobei die Umwandlung einen Vergleich des empfangenen Operationscodes (opc) mit den Referenz-Operationscodes (opc_j) beinhaltet, um die entsprechende Anweisung (ins_k), die auszuführen ist, zu identifizieren.

4. Verfahren nach Anspruch 3, wobei der empfangene Operationscode (opc) binäre Daten umfasst, und der Vergleich logische XNOR-Verknüpfungen umfasst, um ohne Verzögerung den Referenz-Operationscode (opc_k) zu identifizieren, der dem empfangenen Operationscode (opc) entspricht.

5. Verfahren nach einem der Ansprüche 2 bis 4, umfassend einen Empfang eines eingehenden Steuersignals in einer Eingangs-/Ausgangsschnittstelle (GPIO) des gesicherten Elements (SEC), das den empfangenen Operationscode (opc) beinhaltet.

6. Verfahren nach einem der Ansprüche 1 bis 5, wobei das Laden in den nicht flüchtigen Speicher (MEM) nur ein einziges Mal während einer Produktionsphase (EWS) des gesicherten Elements (SEC) ausgeführt (WR_MEM) wird.

7. Verfahren nach einem der Ansprüche 1 bis 6, wobei die mindestens eine weitere personalisierte Funktion (FP) weiter eine Ergänzungsfunktion umfasst, die die Ausführung der einen der zuvor festgelegten Sicherheitsfunktionen (FS) verbessert oder persönlich gestaltet.

8. Verfahren nach einem der Ansprüche 1 bis 7, weiter ein Erzeugen mindestens eines Steuersignals (COM) umfassend, das dazu bestimmt ist, die mindestens eine Ausführung zu steuern.

9. Verfahren nach Anspruch 8, das dazu bestimmt ist, auf ein Fahrzeug (VHCL) angewendet zu werden, wobei das Erzeugen mindestens eines Steuersignals aus mindestens einer der folgenden elektronischen Kontrolleinheiten (ECU) stammt, die in das Fahrzeug eingebaut sind: Einer telematischen Kontrolleinheit (TCU), einem Netzwerk-Gateway (GTW), einer Fahrassistenzeinheit (ADAS).

10. Gesichertes Element (SEC), umfassend einen nicht flüchtigen Speicher (MEM), der konfiguriert ist, um erste Anweisungen (ins_sec) in Bezug auf zuvor festgelegte Sicherheitsfunktionen (FS) zu speichern, und um mindestens eine weitere personalisierte Funktion (FP) zu speichern, und eine Recheneinheit (CPU), die konfiguriert ist, um mindestens eine Anweisung (ins_k) aus den ersten Anweisungen (ins_sec) und die mindestens eine zweite Anweisung (ins_pers) auszuführen,
wobei die zuvor festgelegten Sicherheitsfunktionen (FS) Teil einer Bibliothek von Steuerungen und von Funktionalitäten der Norm "TCG-TPM 2.0" sind, und
die mindestens eine weitere personalisierte Funktion (FP) eine Funktion umfasst, die von den zuvor festgelegten Sicherheitsfunktionen (FS) nicht vorgesehen ist, und die konfiguriert ist, um die Kriterien der Norm "TCG-TPM 2.0" einzuhalten.

11. Gesichertes Element nach Anspruch 10, das imstande ist, einen empfangenen Operationscode (opc) zu empfangen, eine Umwandlungstabelle (LUT) beinhaltend, die konfiguriert ist, um ohne Verzögerung einen empfangenen Operationscode (opc) in eine entsprechende Anweisung (ins_k), die den ersten Anweisungen (ins_sec) oder der mindestens einen zweiten Anweisung (ins_pers) angehört, umzuwandeln, wobei die Recheneinheit (CPU) konfiguriert ist, um die entsprechende Anweisung (ins_k) auszuführen.

12. Gesichertes Element nach Anspruch 11, das konfiguriert ist, um bei jedem Start des gesicherten Elements (SEC) die ersten Anweisungen (ins_sec) und die mindestens eine zweite Anweisung (ins_pers) aus dem nicht flüchtigen Speicher (MEM) zu laden, und den ersten Anweisungen (ins_sec) und der mindestens einen zweiten Anweisung (ins_pers) einen jeweiligen Referenz-Operationscode (opc_j) zuzuweisen, und wobei die Umwandlungstabelle (LUT) konfiguriert ist, um den empfangenen Operationscode (opc) mit den Referenz-Operationscodes (opc_j) zu vergleichen, um die entsprechende Anweisung (ins_k), die auszuführen ist, zu identifizieren.

13. Gesichertes Element nach Anspruch 12, wobei der empfangene Operationscode (opc) binäre Daten umfasst, und die Umwandlungstabelle (LUT) logische XNOR-Verknüpfungen umfasst, um ohne Verzögerung den Referenz-Operationscode (opc_k) zu identifizieren, der dem empfangenen Operationscode (opc) entspricht.

14. Gesichertes Element nach einem der Ansprüche 11 bis 13, eine Eingangs-/Ausgangsschnittstelle (GPIO) beinhaltend, die angepasst ist, um mit einer elektronischen Kontrolleinheit (ECU) verbunden zu werden, und um ein an der Eingangs-/Ausgangsschnittstelle (GPIO) eingehendes Steuersignal zu empfangen, das den empfangenen Operationscode (opc) beinhaltet.

15. Gesichertes Element nach einem der Ansprüche 10 bis 14, wobei der nicht flüchtige Speicher (MEM) konfiguriert ist, um nur ein einziges Mal während einer Produktionsphase des gesicherten Elements (SEC) beschrieben (WR_MEM) zu werden.

16. Gesichertes Element nach einem der Ansprüche 10 bis 15, wobei die mindestens eine weitere personalisierte Funktion (FP) weiter eine Ergänzungsfunktion umfasst, die die Ausführung der einen der zuvor festgelegten Sicherheitsfunktionen (FS) verbessert oder persönlich gestaltet.

17. System, das mindestens ein gesichertes Element (SEC) nach einem der Ansprüche 10 bis 16, sowie mindestens eine elektronische Kontrolleinheit (ECU) beinhaltet, die konfiguriert ist, um Steuersignale (COM) zu erzeugen, die dazu bestimmt sind, die Ausführung der mindestens einen Anweisung (ins_k) zu steuern.

18. Fahrzeug (VHCL) in der Art eines Kraftfahrzeugs, das ein System nach Anspruch 17 beinhaltet, wobei die mindestens eine elektronische Kontrolleinheit (ECU) mindestens eine der folgenden Einheiten umfasst: Eine telematischen Kontrolleinheit (TCU), ein Netzwerk-Gateway (GTW), eine Fahrassistenzeinheit (ADAS).

## Claims

1. A method for managing the operation of a secure element (SEC) comprising loading, in a non-volatile memory (MEM) of this secure element (SEC), first instructions (ins_sec) relating to pre-established security functions (FS) and at least one second instruction (ins_pers) relating to at least one other customised function (FP), and at least executing an instruction from the first instructions (ins_sec) and said at least one second instruction (ins_pers);
wherein said pre-established security functions (FS) are part of a command and functionality library of the "TCG-TPM 2.0" standard, and
said at least one other customised function (FP) comprises a function which is not provided by said pre-established security functions (FS), and which is configured to meet criteria of the "TCG-TPM 2.0" standard.

2. The method according to claim 1, comprising receiving an operation code (opc), converting (LUT) on-the-fly the operation code (opc) received into a corresponding instruction (ins_k) belonging to said first instructions (ins_sec) or to said at least one second instruction (ins_pers), and executing the corresponding instruction (ins_k).

3. The method according to claim 2, comprising, at each start of the secure element (SEC), loading said first instructions (ins_sec) and said at least one second instruction (ins_pers) from the non-volatile memory (MEM) to a look-up table (LUT), and assigning to said first instructions (ins_sec) and to said at least one second instruction (ins_pers) a respective reference operation code (opc_j), said converting including comparing the operation code (opc) received with the reference operation codes (opc_j) so as to identify said corresponding instruction (ins_k) to be executed.

4. The method according to claim 3, wherein the operation code (opc) received comprises binary data, and said comparing comprises exclusive nor (XNOR) logic operations, to identify on the fly the reference operation code (opc_k) corresponding to the operation code (opc) received.

5. The method according to one of claims 2 to 4, comprising receiving an incoming command signal on an input/output interface (GPIO) of the secure element (SEC), including said received operation code (opc).

6. The method according to one of claims 1 to 5, wherein loading in the non-volatile memory (MEM) is performed (WR_MEM) only once during a phase of producing (EWS) the secure element (SEC).

7. The method according to one one of claims 1 to 6, wherein said at least one other customised function (FP) further comprises a complement function improving or customising execution of one of said pre-established security functions (FS).

8. The method according to one of claims 1 to 7, further comprising generating at least one command signal (COM) for commanding said at least one execution.

9. The method according to claim 8 to be applied to an automobile type vehicle (VHCL), wherein said generating at least one command signal comes from at least one of the following electronic control units (ECU), incorporated into the vehicle: a telematic control unit (TCU), an internetwork gateway unit (GTW), a driver assistance unit (ADAS).

10. A secure element (SEC), comprising a non-volatile memory (MEM) configured to store first instructions (ins_sec) relating to pre-established security functions (FS) and to store at least one second instruction (ins_pers) relating to at least one other customised function (FP), and a computation unit (CPU) configured to execute at least one instruction (ins_k) from the first instructions (ins_sec) and said at least one second instruction (ins_pers),
wherein said pre-established security functions (FS) are part of a command and functionality library of the "TCG-TPM 2.0" standard, and
said at least one other customised function (FP) comprises a function which is not provided by said pre-established security functions (FS) and which is configured to meet criteria of the "TCG-TPM 2.0" standard.

11. The secure element according to claim 10, capable of receiving an operation code (opc) received, including a look-up table (LUT) configured to convert on-the-fly an operation code (opc) received into a corresponding instruction (ins_k) belonging to said first instructions (ins_sec) or to said at least one second instruction (ins_pers), the computation unit (CPU) being configured to execute the corresponding instruction (ins_k).

12. The secure element according to claim 11, configured to, at each start of the secure element (SEC), load said first instructions (ins_sec) and said at least one second instruction (ins_pers) from the non-volatile memory (MEM), and assign, to said first instructions (ins_sec) and to said at least one second instruction (ins_pers) a respective reference operation code (opc_j), and wherein the look-up table (LUT) is configured to compare the operation code (opc) received with the reference operation codes (opc_j) so as to identify said corresponding instruction (ins_k) to be executed.

13. The secure element according to claim 12, wherein the operation code (opc) received comprises binary data, and the look-up table (LUT) comprises exclusive nor (XNOR) logic gates, to identify on-the-fly the reference operation code (opc_k) corresponding to the operation code (opc) received.

14. The secure element according to one of claims 11 to 13, including an input/output interface (GPIO) adapted to be connected with an electronic control unit (ECU), and to receive an incoming command signal on the input/output interface (GPIO) including said operation code (opc) received.

15. The secure element according to one of claims 10 to 14, wherein the non-volatile memory (MEM) is configured to be written (WR_MEM) only once during a phase of producing the secure element (SEC).

16. The secure element according to one of claims 10 to 15, wherein said at least one other customised function (FP) further comprises a complement function improving or customising execution of one of said pre-established security functions (FS).

17. A system including at least one secure element (SEC) according to one of claims 10 to 16, as well as at least one electronic control unit (ECU) configured to generate command signals (COM) for commanding execution of said at least one instruction (ins_k).

18. An automobile type vehicle (VHCL), including a system according to claim 17, said at least one electronic control unit (ECU) comprising at least one of the following units: a telematic control unit (TCU), an internetwork gateway unit (GTW), a driver assistance unit (ADAS).
